# EUROPEAN PATENT APPLICATION

(11) **EP 4 718 143 A1**
(43) Date of publication of application: **01.04.2026**
(21) Application number: 24202754.8
(22) Date of filing: 26.09.2024
(51) Int. Cl.: G02B 26/10, G01S 17/89, G02B 27/01

(54) **PROJECTOR AND METHOD OF PROJECTION**

(71) Applicant: VoxelSensors SRL, 1000 Brussels (BE)
(72) Inventor: Greenberg, Boris, 6579402 Tel Aviv Jaffa (IL); Van Der Tempel, Ward, 3140 Keerbergen (BE)

(57) **Abstract**

The present invention relates to a method for 3D projection. The method comprises the step of projecting a first light beam (5') onto a 3D scene (6), thereby creating a first light spot (8') on said 3D scene (6), by means of a first projector (4'). The method further comprises the step of scanning said first light beam (5') along a first trajectory (9'), by means of a scanner. The method further comprises the step of imaging said scene (6) onto a plurality of rows and columns of sensing units (3) of an optical sensor (2), by means of optics, wherein the first light spot (8') in the scene (6) corresponds to a detected spot (23) on said optical sensor (2), wherein said detected spot (23) has a detected spot size determined by said sensing units (3). The detected spot size has a predetermined range between a maximum value (24') and a minimum value (24"). The first light beam (5') has a predetermined divergence such that said detected spot size has said minimum value (24") when the first light spot (8') is at a maximum predetermined distance (25") from the optical sensor (2), and such that said detected spot size has said maximum value (24') when the first light spot (8') is at a minimum predetermined distance (25') from the optical sensor (2), wherein the maximum and minimum predetermined distances (25', 25") define the operable range of distances from said optical sensor (2).

## Description

### TECHNICAL FIELD

The present invention relates to a method of 3D projection.

### BACKGROUND

Optical sensors are known in the art. In many cases, such sensors are made of a plurality of pixels. Such optical sensors have many applications, one of which is wearable devices, for example AR/VR glasses. In many cases, such systems use a scanning light beam to scan the scene and obtain information thereof. One problem of projectors is the keystone effect, which adds a distortion to detected images of the scene. This can be improved by adding further components to the system, which adds complexity thereto. A complex solution normally has a large footprint which increases the power consumption. Complex solutions are also often bulky which means they are unsuitable for AR/VR/XR solutions, e.g. to be fit on a pair of glasses. There is no known simple solution, consuming low power, and which exhibits no keystone effect.

Another challenge is improving the signal to noise ratio in such systems, especially that the sensing distances vary largely. For example, filtering light coming (or reflected) from larger distances may be more difficult than filtering light coming from shorter distances.

The present invention aims to resolve at least in part the problems mentioned above.

### SUMMARY OF THE INVENTION

It is an object of embodiments of the present invention to overcome the limitations discussed above and obtain a better filtering performance.

In a first aspect, the present invention relates to a method for 3D projection, comprising the steps of:
- projecting a first light beam onto a 3D scene, thereby creating a first light spot on said 3D scene, by means of a first projector;
- scanning said first light beam along a first trajectory, by means of a scanner;
- imaging said scene onto a plurality of rows and columns of sensing units of an optical sensor, by means of optics, wherein the first light spot in the scene corresponds to a detected spot on said optical sensor, wherein said detected spot has a detected spot size determined by said sensing units;

wherein the detected spot size has a predetermined range between a maximum value and a minimum value,
wherein said first light beam has a predetermined divergence such that said detected spot size has said minimum value when the first light spot is at a maximum predetermined distance from the optical sensor, and such that said detected spot size has said maximum value when the first light spot is at a minimum predetermined distance from the optical sensor, wherein the maximum and minimum predetermined distances define the operable range of distances from said optical sensor.

For example, said predetermined divergence is adapted such that said detected spot size is between said maximum value and said minimum value.

The plurality of rows and columns of sensing units is advantageous in allowing different filtering methods, as explained below. This is also advantageous in improving error tolerance. Having said minimum detected spot size at said maximum distance is advantageous in maximizing the energy per pixel, and therefore reducing the noise by operating at a minimum possible detected spot size corresponding to a maximum possible noise level. It is also easier to distinguish the active light from the noise if the detected spot size is known or within a certain range of detected spot sizes. This is in contrast with current methods where the detected spot size is determined by the distance, in which the filtering becomes more difficult because the detected spot size for long distances is significantly different than the detected spot size for short distances, and therefore filtering becomes difficult. Normally, the detected spot size at long distances tends to be quite big, and the energy per pixel is small, therefore it becomes difficult to distinguish the active light from the noise, because the energy per pixel is scarce, and therefore filtering becomes difficult. However, in this invention, a certain energy per pixel is ensured by ensuring said minimum detected spot size which allows the system to operate. This is done by controlling the divergence so as to achieve said minimum detected spot size. It is advantageous that the energy per pixel is improved. For example, the spatial condition may constrain detection of a spot to clusters of 2x2 pixels. With the detection spot size falling below this spatial condition, the spot may not be detected. In the other direction, if the detected spot size becomes much larger than 2x2, multiple pixels will pass the spatial condition and the location of the spot becomes an area rather than a single location. This increase in detected spot size is less relevant in the short range, as sufficient energy is available per pixel, even when spread across a larger detected spot size. However, when the detected spot size increases for the long range, which is scarce in returned photons, the available reflected energy of the spot is now spread over more pixels and the SNR (signal to noise ratio) and/or detection rate of the spot will fall. In other words, the aim is that the energy per pixel is maximized, such that the minimal allowed spot size for filtering purposes is achieved. Having a range of detected spot sizes within a range of distances (as large as possible) from the optical sensor is especially advantageous for filtering, as explained below. This is because it is easier to distinguish the active light from the noise if the detected spot size is known.

The method is also advantageous as it allows, in some embodiments, triangulating data of the first projector (or second projector as shown below) e.g. instantaneous position of the light beam, with data of the optical sensor e.g. detection, to be able to get depth information of the scene.

Preferred embodiments of the first aspect of the invention comprise one or a suitable combination of more than one of the following features.

The method preferably comprises the step of projecting a second light beam onto said 3D scene, thereby creating a second light spot on said 3D scene, by means of a second projector. The method preferably further comprises the step of scanning said second light beam along a second trajectory, by means of said scanner or a different scanner, wherein said first trajectory and said second trajectory are overlapping in a region of overlap.

It is an advantage of embodiments of the present invention that the presence of a blind spot is avoided, due to the region of overlap. For example, no blind angular space or range as seen by the optical sensor. This is further advantageous in obtaining more information of the scene in the region of overlap. It is an advantage of embodiments of the present invention that, the overall scanning region is increased, since each mirror has a scanning range in which the light of one projector is scanned, therefore by having two projectors, said scanning range is extended.

The method preferably comprises the step of adapting said region of overlap to be at a substantially central location in the scene, with respect to at least one scanning dimension. This is advantageous in obtaining more information at the center of the scene, in case the central location of the scene is more important to the use than other regions in the scene.

The method preferably comprises the step of pulsing said first and second light beams at a predetermined pulsing rate, wherein the pulsing rate in a region of interest of a user is substantially different than elsewhere. This is advantageous in reducing power consumption, since the pulsing is done at different rates based on the importance of the different regions in the scene.

The method preferably comprises the step of adapting the scanning trajectory to have at least a maximum and a minimum scanning velocities, wherein the scanning velocity at the region of overlap is either the minimum or the maximum scanning velocity. This is advantageous in getting a balance between oversampling/undersampling due to the scanning velocity, and the power consumption.

The method preferably comprises the step of adapting the divergence so as to have a detected spot size of at least two by two pixels, preferably at least three by three pixels. It is an advantage of embodiments of the present invention that a more reliable detection is obtained, due to the fact that the filtering of a detection of a pixel can be improved using detection of neighborhood pixels and/or detection over at least two time steps for the pixels and/or its neighboring pixels, as explained below.

The first and second projector are preferably distanced by a predetermined distance, wherein said distance is adapted such that said region of overlap is created. This is advantageous in ensuring there are no regions in the scene on which no light is scanned.

The method preferably comprises the step of adapting the scanning such that the first and second trajectory on said scene are symmetrical along a line of symmetry, wherein said line of symmetry crosses said region of overlap. This is advantageous in preventing the keystone effect.

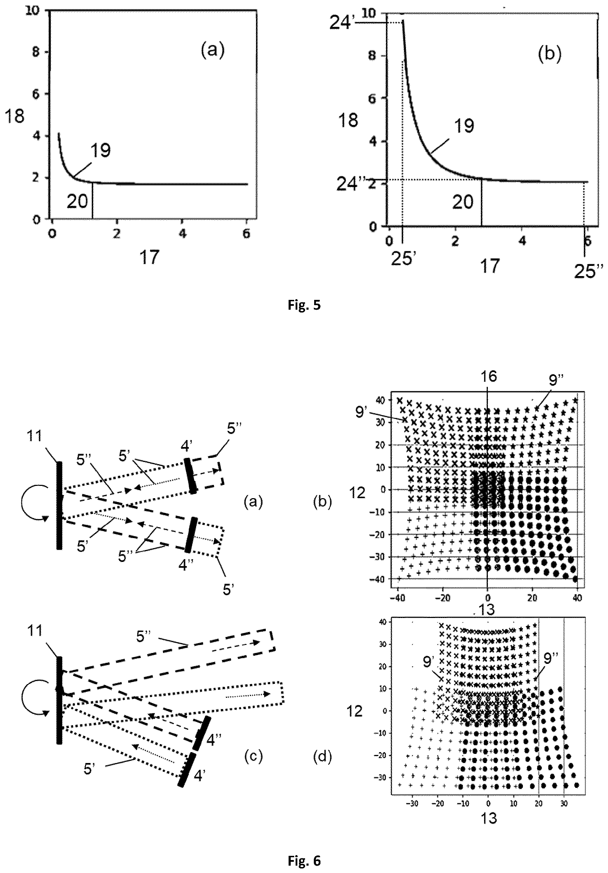

The ratio between said maximum and said minimum values of detected spot sizes is preferably at most 10:1, preferably at most 5:1, more preferably at most 2:1, even more preferably 1.5:1, most preferably 1:1. An ideal situation would be that the detected spot size is substantially the same along a large range of distances from said optical sensor, in this case between said predetermined minimum and maximum distances. However, as that is not easily achievable, the ratio between the maximum and minimum range of detected spot sizes is as small as possible, thereby helping in distinguishing between noise and active light, since in this case the detected spot size becomes more predictable. Therefore, the predetermined divergence is such that the detected spot size is within said range of detected spot sizes, and above a predetermined distance (as explained in Fig. 5), it is substantially the same with a margin of percentages e.g. less than 10, 20, 30, or 50%, up to the maximum operating distance of the system.

In a second aspect, the present invention relates to a system for 3D optical sensing, comprising:
- a first optical sensor, wherein said first optical sensor comprises a plurality of rows and columns of sensing units, and each sensing unit comprises a photo detector,
- a first projector, adapted to project a first light beam onto a 3D scene, thereby creating a first light spot on said scene,
- scanning means adapted to scan the first light beam on said 3D scene along a first trajectory, and
- optics adapted to image said scene onto said sensing units,

wherein the first light spot in the scene corresponds to a detected spot on said optical sensor, wherein said detected spot has a detected spot size determined by said sensing units;
wherein the detected spot size has a predetermined range between a maximum value and a minimum value,
wherein said projector is adapted to have a predetermined divergence such that said detected spot size has said minimum value when the first light spot is at a maximum predetermined distance from the optical sensor, and such that said detected spot size has said maximum value when the first light spot is at a minimum predetermined distance from the optical sensor, wherein the maximum and minimum predetermined distances define the operable range of distances from said optical sensor.

It is an advantage of embodiments of the present invention that filtering is improved, and that error tolerance in detection is improved, and energy per pixel is improved.

Preferred embodiments of the second aspect of the invention comprise one or a suitable combination of more than one of the following features.

The system preferably comprises a second projector, adapted to project a second light beam onto said 3D scene, thereby creating a second light spot on said scene, wherein said scanning means or a different scanning mean, is adapted to scan the second light beam on said 3D scene along a second trajectory, wherein said first trajectory and second trajectory are overlapping in a region of overlap. This is advantageous in preventing a blind spot, and in obtaining more information of the scene in the region of overlap, and increasing the overall scanning region.

The scanning means is preferably a scanning mirror. The system preferably further comprises a polarizer, and polarization changing element, wherein the light beams have, initially, a first predetermined polarization, wherein the polarizer is adapted to reflect the light beams from said projectors to said mirror through the polarization changing element, wherein the polarization changing element is adapted to change the polarization of the light beams to a second predetermined polarization, wherein the second predetermined polarization is such that the polarizer is transparent to said light beams, wherein the mirror is adapted to reflect said light beams symmetrically with respect to each other.

The system (or a processor therein) is preferably adapted to triangulate detection points of said first optical sensor with instantaneous position of said first and/or second light beams, or with detection points of a second optical sensor.

The system is preferably adapted to construct the scene progressively as the scene is scanned, based on 3D points obtained during scanning by e.g. said triangulation, wherein one 3D point is obtained at each time step. The 3D points may also be obtained using other techniques such as time of flight. An image of the scene may thereafter be obtained on an image display, but not necessarily. It is an advantage of embodiments of the present invention that information about objects in the scene is obtained in low latency, or almost in real-time.

The system preferably is adapted to filter the detection (e.g. of a light spot) determined by one sensing unit, at any time during scanning, based on the consecutive detection on one sensing unit and/or based on detections on two neighboring sensing units. For example, filtering the detection determined by one sensing unit, based on the presence of a detection over at least one neighboring sensing unit to said one sensing unit at one time step, and/or based on the presence of said detection over at least two consecutive time steps. Advantageously, a more reliable detection is obtained.

In a third aspect, the present invention relates to a headset or wearable device comprising the system according to the second aspect.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention.

### DESCRIPTION OF THE FIGURES

The disclosure will be further illustrated by means of the following description and the appended figures.
Figure 1 shows an optical sensing system (1) comprising two light sources (4', 4") projecting light beams (5', 5") on a 3D scene (6), according to embodiments of the present invention.
Figure 2 shows in (a-b) the light spot (8') for a close and a further object, respectively, and the corresponding detected spot size of detection (23) on the optical sensor (2) in (c-d), according to embodiments of the present invention.
Figure 3 shows the scanning trajectory (9', 9") of said light spots (8', 8") and the region of overlap (10) in between, according to embodiments of the present invention.
Figure 4 shows two projectors (4', 4") separated with a predetermined distance (d), according to embodiments of the present invention.
Figure 5 shows the distance versus the beam size measured in number of pixels, according to embodiments of the present invention.
Figure 6 shows the keystone effect issue, according to embodiments of the present invention.
Figure 7 shows possible system configurations to prevent the keystone effect, according to embodiments of the present invention.

The drawings presented herein are illustrative for the present invention and are not to scale.

Any reference signs in the claims shall not be construed as limiting the scope. In the different drawings, the same reference signs refer to the same or analogous elements.

### DETAILED DESCRIPTION

The present invention relates to a method for 3D projection and a system for 3D optical sensing.

In a first aspect, the present invention relates to a method for 3D projection. The method comprises the step of projecting a first light beam onto a 3D scene, by means of a first projector. The light beam creates a first light spot on the 3D scene. Said spot may for example be dot-shaped or a semi-dot or disk-shaped or a collection of dots or any other suitable shape. Knowing the shape of the light spot is advantageous for filtering purposes (e.g. neighborhood and/or persistence filtering) as discussed below. The method comprises the step of scanning said first light beam on said scene along a first trajectory, by means of a scanner. Scanning is done in at least one dimension, preferably in two dimensions, for example two dimensions perpendicular on each other, for example a horizontal and vertical dimension. Scanning may be for example in a Lissajous pattern or a raster scan, or the like, for example a repetitive projection pattern. The scanning means may for example be a MEMS scanner or a mirror, or an optical phase array, or meta surface approach beam scanning, or the like. For example, scanning between two extreme vertical lines (e.g. one on the extreme right, and one on the extreme left) defining the scene in the horizontal direction, and two extreme horizontal lines (e.g. one on the extreme top, and one on the extreme bottom) defining the scene in the vertical direction.

The light beam may be continuous or pulsed, and the present invention can work with either. It is however preferrable to use a pulsed light beam (e.g. a pulsed laser) since the power is concentrated in the pulse i.e. each pulse has a higher power while maintaining the same average power, thereby allowing easier detection and filtering. Also, using a pulsed light beam is advantageous when using persistence or neighborhood conditions (explained below) for better filtering, as it allows to check said conditions based on the pulse length, instead of based on observation windows as in the case of a continuous pulse, which is typically longer than the pulse length.

The method comprises the step of imaging the scene onto a plurality of rows and columns of sensing units of an optical sensor. Each sensing unit comprises a photo detector. Imaging is done, for example, by means of the appropriate optics, imaging the reflected light from the scene onto the optical sensor. For example, the light is reflected, after hitting objects in the scene, imaged by said optics, and finally received by the optical sensor e.g. by the corresponding sensing unit to the point on the scene. In other words, such optics ensure the reflected light reaches the corresponding sensing unit. The method comprises the step of determining and/or measuring the location of detection on said optical sensor at any time of scanning.

For example, the method comprises the step of configuring said optical sensor in a plurality of rows and columns of said sensing units. This allows filtering based on neighborhood detections e.g. to exclude single isolated detections caused by noise. This also provides some error tolerance in case the photons were not detected by the predicted sensing units, but by sensing units which are neighboring thereto. For example, the number of rows and columns may be chosen as suitable to compensate for errors and to make sure of receiving the light by the optical sensor. For example, the number of rows and columns is chosen such that the light spot is completely detected by at least one sensing unit of said optical sensor.

The first light spot in the scene corresponds to a detection (detected spot) on said optical sensor, wherein said detection has a detected spot size determined by said sensing units. For example, the light spot has a predetermined spot size corresponding to 2 by 2 pixels (i.e. sensing units), or 3 by 3 pixels, within a range distances from the optical sensor. This is achieved by adapting said first light beam to have a predetermined divergence, such that said detection has a detected spot size on said optical sensor within a range of detected spot sizes, within a range of distances from said optical sensor.

Having a predetermined divergence is advantageous in ensuring that the detected spot size is always within a known range of detected spot sizes, which is advantageous in filtering, since it is known that the expected detected spot size is always e.g. between 2 by 2 and 6 by 6 pixels, within a large range of distances from the optical sensor. This reduces the noise and makes filtering simpler and easier. Using a collimated beam, as it is the case in the prior art, would result in having a large detected spot size for far away detections which is scarce in energy, as well as too few photons detected, which disadvantage is solved by using a diverging beam with a known divergence. Using a collimated beam would also result in the close detection being too big, and too many photons detected, which increases the noise. This is also solved by using the diverging beam, or alternatively by using lower power levels.

In some embodiments, above a predetermined distance (as shown in Fig. 5), the detected spot size may be different with significant variation of the distance, but preferably, the detected spot size differs by less than 5%, preferably less than 10%, preferably less than 20%, preferably less than 50%. In other words, the detected spot size should not vary to a degree that makes filtering because of having unpredictable and unknown detected spot size therefore not easily being able to distinguish between the active signal (i.e. the light beam scanned on the scene) on the scene and the noise. This is, of course, unless the maximum operating distance is exceeded.

For example, the divergence is less than 20 milliradians, preferably less than 10 milliradians, more preferably less than 5 milliradians, most preferably less than 2 milliradians. However, this depends on the parameters of the laser projector and optics (e.g. lenses and mirrors) in the system, so these parameters are not to be understood as restrictive to the invention.

It is to be noted that, although it is preferable to have the detection being the same detected spot size for all distances from the optical sensor, this is very difficult to achieve. Therefore, in practical terms, the detection has a detected spot size which is substantially the same, or within a certain range of error e.g. less than 20% or less than 50%, over a large range of distances from said optical sensor. For example, instead the detected spot size may vary from being 2x2 pixels, to being 6x6 pixels, over a long range of distances, and above a predetermined distance, it may vary less significantly, e.g. from being 2x2 pixels to being 3 x 3 or 4 x 4 pixels, as shown in Fig. 5.

Preferably, the divergence may be the same or different in the two scanning dimensions. For example, in one dimension (e.g. vertically), the divergence may be higher, therefore the predetermined distance (after which the detected spot size changes in a less significant manner, see Fig. 5) is smaller, while in the other dimension (e.g. horizontally), the divergence may be smaller, therefore the predetermined distance is larger. This is advantageous in case the field of view in one dimension is smaller than the field of view in the other dimension, for example in case of field folding.

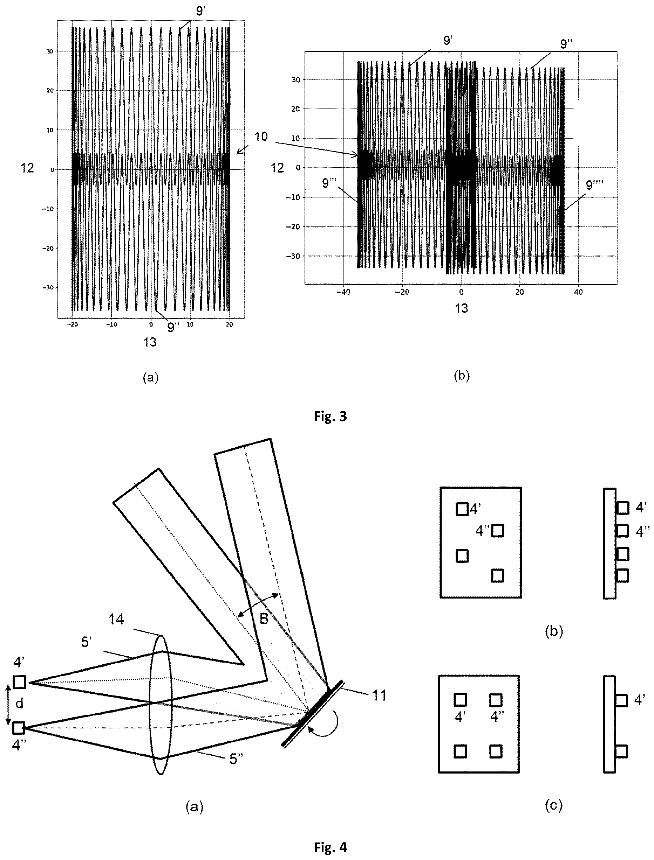

Preferably, the method comprises the step of projecting a second light beam onto said 3D scene, thereby creating a second light spot on said 3D scene, by means of a second projector. The method further comprises the step of scanning said second light beam along a second trajectory, by means of said scanner or a different scanner, wherein said first trajectory and said second trajectory are overlapping in a region of overlap. As shown in Fig. 4, one scanner being a mirror is able to scan different projectors (light sources) on the scene, and also allows the region of overlap. A second trajectory and a region of overlap are advantageous for a few reasons. Firstly, a blind spot between the two trajectories is avoided. Secondly, this allows obtaining more information in the region of overlap. For example, the region of overlap is placed somewhere where more information (i.e. more samples) is needed, as discussed further below. Thirdly, the overall scanning region is increased by having two or more trajectories. For example, in case of using one mirror with a predetermined scanning range, then having two projectors on said mirror increases the scanning region. It is possible, however, for each trajectory to have its own scanning means (e.g. mirror or MEMS, reflecting the first and second light beams to scan it on said scene). Of course, the imaging of the scene comprises imaging both the first and second lights spots. This can be adjusted further to have a third and a fourth projector, and therefore a third and a fourth light beam, with a region of overlap in between, so as to cover a bigger part of the scene, as shown in Fig. 3(b).

Preferably, a further projector may be present to only illuminate and scan the region of overlap, to further increase the resolution of points obtained in said region, by obtaining further data points in that region.

Preferably, a further projector may be present in the region(s) on which the scanner has the highest scanning velocity, such that more information of the scene is obtained in such regions, because the regions with high scanning velocity has the least sampling points, and therefore the least information in the scene.

Preferably, the scanning means or scanner has a predetermined scanning range (e.g. mirror tilt). The first and second light beams have a predetermined angle difference. The angle difference is equal to or less than the scanning range, to be able to avoid a blind spot. For example, if the angle difference is equal to the scanning range, then the blind spot is avoided, but no overlap region is present. There are advantages to having a region of overlap, as explained in different parts of the description, and therefore it is preferable that the angle difference is less than the scanning range. The scanning mirror is able to rotate in two dimensions e.g. x and y. The angle difference may be related to the distance d between the two projectors.

It is possible that the mirror is followed by an optical relay, for example in case the mirror tilt is small, in which case the optical relay expands the angle. For example, with a mirror tilt of 10 degrees, the optical relay may be useful to expand the angle such that it appears as if the mirror tilt is 40 degrees.

Preferably, the method comprises the step of adapting said region of overlap to be at a substantially central location in the scene, with respect to at least one scanning dimension. For example, at the central location vertically, and/or at the central location horizontally. For example, the scanning is done in the vertical and/or horizontal dimensions, wherein the central location is at the central location of one or both dimensions e.g. at a central location of the scene. For many applications, obtaining information at the central location of the scene vertically and/or horizontally is important, for example in case of AR/VR, the user is interested most of the time at the central location of the scene, while the user is interested less, for example, in the lower part of the scene, and the upper part of the scene. Having the region of overlap in the center allows getting more information (i.e. more samples) in the area in which the user has interest.

Preferably, the method comprises the step of pulsing said first and second light beams at a predetermined pulsing rate, wherein the pulsing rate in a region of interest of a user is substantially different than elsewhere. The region of interest of the user may be the region of overlap, preferably wherein the region of overlap is at a central location of the scene, and preferably wherein the region of overlap has a reasonable area so as to allow obtaining more information of the region of interest by pulsing at high pulsing rates. For example, increasing the pulsing rate in the region of overlap to get more information (i.e. samples), or alternatively, decreasing the pulsing rate in the region of overlap to save power (e.g. more than 10%) and to avoid oversampling. For example, the method involves reducing the sampling rate in the regions of overlap, or generally reducing the sampling rate in the regions of low scanning velocity or regions in which there is too much information of the scene. Having a region of overlap on its own means there are more samples that are obtained in that region, therefore the pulsing rate may have to be reduced to save power. This can be done generally at different parts of the scene, for example classifying the scene into regions of high interest and regions of low interest, and adapting the pulsing rate accordingly to get more or less samples. For example, the pulsing rate is higher in the region of overlap, which is beneficial when the region of overlap is a region of high interest, for example when the region of overlap is at substantially central location of the scene, because for many applications, the central location of the scene is of high importance (e.g. VR/AR/XR applications).

Preferably, the method comprises the step of adapting the scanning trajectory to have at least a maximum and a minimum scanning velocities. The scanning velocity at the region of overlap is adapted to have either the minimum or the maximum scanning velocity. Having a minimum scanning velocity at the region of overlap allows getting more samples at that region, which is in many cases a region of high interest as discussed above. In other words, having a minimum scanning velocity allows getting denser sampling for that region i.e. there will be more samples within a small area of the scene. An alternative is to have a maximum scanning velocity in that region, since the region has denser sampling due to being sampled by two light beams along two trajectories overlapping the region of overlap. It is to be understood that the scanning velocity may be a gradient of velocities between the maximum and minimum scanning velocities, for example such that the scanning velocity is variable throughout the scene between the maximum and minimum velocities.

The sampling and pulsing rate may be related to each other, for example in case of many samples, the pulsing rate may be reduced to reduce power consumption, or in case of too few samples, the pulsing rate may be increased to get more samples. For example, if the scanning trajectory is such that the velocity of scanning on the scene is low or close to zero for a part of the scene, therefore corresponding to many samples due to the lower velocity, the pulsing rate may be reduced (e.g. undersampling) to save power, while still getting the required samples for that part of the scene. In other parts, where the scanning velocity is high, therefore less samples are obtained, the pulsing rate may be increased to compensate for having less samples (e.g. oversampling). The scanning velocity is defined as the velocity at which the light beam goes through the scene, which can be faster or slower at certain parts of the scene depending on the trajectory. For example, the Lissajous scan shown in Fig. 3 is faster in one axis, and slower in the other axis.

Preferably, the method further comprises the step of adapting the divergence so as to have a detected spot size of at least two by two pixels, preferably at least two by three pixels, preferably at least three by three pixels. The detected spot size is adapted to be sufficiently big to get sufficient spatial resolution of the position of the spot. This is advantageous for filtering detections, as described below. This is also advantageous in allowing to understand the movement of the light spot on the scene across time. Generally, the method comprises the step of adapting the divergence so as to have a detected spot size on the optical sensor corresponding to the number of pixels needed for the filter to operate. For example, if the filter operates based on neighborhood pixels, and requires 2 by 2 pixels (e.g. 2 pixels in the vertical direction and 2 pixels in the horizontal direction, so 4 connected pixels), then the detected spot size on the optical sensor should also be 2 by 2 pixels. The maximum detected spot size is preferably below six by six pixels, more preferably below five by five pixels. This allows maximizing the energy per pixel. It is to be understood that, between said minimum and maximum predetermined distances, the detected spot size, in one example, goes from e.g. 6x6 or 5x5 pixels (at the minimum predetermined distance), down to 2x2 pixels (at the maximum predetermined distance). This is further explained in Fig. 5. For example, the detected spot size may grow in an exponential-like or a linear manner closer to the optical sensor, e.g. the detected spot size becomes too large or "blows up", due to the abundance of energy per pixel in such a short distance from the optical sensor, compared to that at a large distance of the optical sensor.

Preferably, the first and second projector are distanced by a predetermined distance, wherein said distance is adapted such that said region of overlap is created. This is advantageous in ensuring there are no regions in the scene on which no light is scanned.

Preferably, the method comprises the step of adapting the scanning such that the first and second trajectory on said scene are symmetrical along a line of symmetry, wherein said line of symmetry crosses said region of overlap. By doing this, the keystone effect is avoided, and therefore the scene is readily perceived symmetrically, without needing to compensate for the keystone effect, as discussed below in the figures.

Preferably, the method comprises the step of filtering the detection determined by one sensing unit, based on the presence of a detection over at least one neighboring sensing unit to said one sensing unit at one time step, and/or based on the presence of said detection over one or more sensing unit, over at least two consecutive time steps. In other words, the method comprises the step of filtering the detection/image of a light spot by a sensing unit at any time during scanning, based on the last detection/image of a light spot and/or the next detection/image of a light spot on said sensing unit and/or on a vicinal sensing unit. Filtering the detection determined by one sensing unit can be based on the (positive) detection over at least one neighboring sensing unit vicinal to one sensing unit at one time step, and/or based on the (positive) detection by one sensing unit over at least two consecutive time steps. This allows reliable detection. For example, a noise signal would neither, in most cases, appear over many neighboring pixels, nor appear on the same pixel over multiple consecutive time steps. Filtering is particularly advantageous for this invention as it makes it easier to distinguish the active light from the noise.

Preferably, the scanning in a first dimension (e.g. vertically) and in a second dimension (e.g. horizontally) has the same or two different rates. For example, the scanning is done in both the horizontal and vertical dimension, simultaneously, wherein the scanning in the vertical dimension is faster or slower than the horizontal dimension. For example, the scene is scanned with two different frequencies along two dimensions. For example, resulting in scanning trajectories such as Lissajous or others.

Preferably, the method comprises the step of receiving triangulation data from the first optical sensor, and, by means of a processor, and triangulating detection points obtained by said optical sensor with instantaneous position of said light beam.

In one embodiment, the optical sensing system further comprises at least a second optical sensor, for example constructed similarly to the first optical sensor. In that case, the processor is configured to receive detection data from the first optical sensor and from the second optical sensor and to triangulate detection points obtained by said first optical sensor with detection points of said second optical sensor. This allows obtaining the depth of objects in the scene. Since the detection relies on the instantaneous position of the light beam e.g. of the instantaneous position of the emitted light of the projector, the need for stereo-matching is eliminated, for example between the light source and the first optical sensor, or between the first optical sensor and a second optical sensor. For example, the image in the first optical sensor can be matched to the image in the second optical sensor, for example using said light spot as a reference, without need for stereo-matching. In the case of two projectors and one optical sensor, the triangulation may be calculated for each projector separately i.e. one projector is triangulated with the optical sensor, then the other projector is triangulated with the optical sensor. This can happen in two scenarios: 1) the two projectors are on the same baseline as the optical sensor, or 2) the two projectors are not on the same baseline as the optical sensor. In the first scenario, to be able to distinguish between projectors, the projectors are adapted to operate at different times. In the second scenario, it is readily possible to distinguish between the projectors as they are not on the same baseline as the optical sensor, therefore the projectors can be triangulated at the same time.

Preferably, the method comprises the step of constructing the scene progressively i.e. as the scene is scanned, based on 3D points obtained from e.g. said triangulation. In other words, one 3D point is obtained at each time step, such that the scene and information thereof is progressively obtained. In other words, after many time steps, many 3D points are obtained in the scene, wherein one 3D point is obtained at each time step. This allows low latency operation and real-time knowledge of objects in the scene.

Preferably, each light beam has a unique temporal stamp, for example a unique duty cycle or a temporal width or other properties of the light beam, such that it is possible to distinguish from different light beams, for example in case the system has more than one light beam, or in case other light beams from other systems are present in the scene. This way it is possible to know the genuine location or index of the light beam on the scene with great accuracy, especially in presence of multiple light beams.

Preferably, the method comprises the step of distinguishing (e.g. by filtering) the active signal (e.g. the light spot on the scene) from the background noise, on the optical sensor. For example, by coincidence / persistence filtering conditions as explained in different parts of the document. This is made easier by the fact that the detected spot size is fixed or substantially the same (or within a limited predetermined range), above a predetermined distance.

In a second aspect, the present invention relates to a system for 3D optical sensing of a scene. The system comprises at least a first optical sensor, wherein said optical sensor comprises a plurality of sensing units, and each sensing unit comprises a photo detector.

The system comprises a projector adapted to project a light beam on a 3D scene. The projector is, for example, a light source. The light source is adapted to generate a light beam which generates a light spot on said scene (i.e. on the field of view of the optical sensor).

The system comprises scanning means adapted to scan the light beam on said 3D scene along a first trajectory (or path). Said trajectory comprises a plurality of points (or spot areas) on said scene, wherein at each time step, one point (or spot area) is scanned. It is preferable to scan as many points (or spot areas) as possible, since this implies more information is obtained in relation to the scene and the depth of each point. However, the time-speed tradeoff must be understood, for example having more points would result in slower scanning. Scanning is preferably continuous, such that objects in the first field of view are continuously scanned and identified. For example, a light source generates a light beam, which produces a light spot on an object, wherein said beam is continuously (e.g. repeatedly) scanned on said scene along said trajectory.

The system comprises optics adapted to image said scene onto said optical sensor i.e. the optics is able to make an image of said scene on sensing units of said first optical sensor. Based on the location of the light beam imaged on said first optical sensor, the depth information of the scene may be calculated by triangulation (or other methods).

The reflected light from the scene (e.g. from an object in the scene) is received by at least one sensing unit, after which the optical pulse is translated into an electrical signal or logic pulse. Each pulse is timestamped with respect to a reference clock.

Since the detection is based on the light beam, and since there is a significant difference between an illuminated point and a non-illuminated point due to the concentration of the illumination in a small area (e.g. the beam is a dot-like pattern), the system is immune to ambient light. At the same time, it is known where the beam is shining at each moment, therefore a detection in or area in which the beam is not shining at that moment, is likely a false detection. Similarly, since the detection is based on said beam being e.g. dot-like, the power consumption is minimal.

The optical sensor is configured in a plurality of rows and columns of said sensing units. This is advantageous in allowing the detected signal to be filtered, for example using temporal and/or neighborhood information, for example as described in WO2021/240455, WO2022/136682, WO2023/281308, and WO2023047245. For example, checking the detection of the neighboring sensing units, since the detections are likely to be detected over more than one pixel, as described in WO2022/136682. Alternatively or additionally, checking the persistence of the detections over time as described in WO2023047245. Therefore, the detections which are persistent over a long period of time are likely true detections, and the detections otherwise are likely false detections. Other filtering mechanisms may be envisaged, as described in WO2021/240455, WO2022/136682, WO2023/281308, and WO2023047245.

The projector is adapted such that it has a predetermined beam divergence, such that said detected spot size has said minimum value at a maximum predetermined distance, and such that said detected spot size has said maximum value at a minimum predetermined distance, wherein the maximum and minimum predetermined distances define the operable range of distances from said optical sensor.

This is advantageous in comparison to a system in which the beam is collimated. For example, in a system with a collimated beam, the sensor would see a very big detected spot at large distances, and a very small detected spot at short distances, therefore the number of pixels which receive the reflected light is significantly different in both cases i.e. the kernel has a very different size. However, in our system, the beam is designed to have a beam divergence, such that at short and long distances, the number of pixels which receive the reflected light would vary within a certain range i.e. the kernel is within a certain detected spot size. This is advantageous in keeping the signal to noise ratio at a certain acceptable level, which is advantageous for distinguishing noise from the real signal. Furthermore, it is preferable that above a predetermined distance, the detected spot size changes in a less significant manner, as shown in Fig. 5.

Preferably, the system further comprises a second projector, adapted to project a second light beam onto said 3D scene, thereby creating a second light spot on said scene, wherein said scanning means or a different scanning mean, is adapted to scan the second light beam on said 3D scene along a second trajectory, wherein said first trajectory and second trajectory are overlapping in a region of overlap.

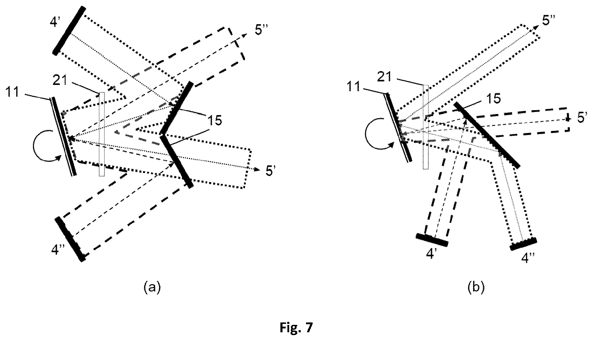

Preferably, the scanning means is a scanning mirror, for example a rotatable mirror. For example, a MEMS mirror. The system preferably further comprises a polarizer, and polarization changing element. Some examples are shown in Figs. 7 (a-b). The light beams have, initially, a first predetermined polarization. The first predetermined polarization was such that the polarizer is able to reflect the lights beams from said projectors i.e. acts as a mirror, where no light can pass through in the first predetermined polarization. The light is reflected to the scanning mirror through the polarization changing element. The polarization changing element is for example a lambda/4 waveplate. The goal of the element is to transform the polarization to a second predetermined polarization, such that the light beams are transparent to the polarizer. For example, the polarization is rotated by 90 or 180 degrees. The scanning mirror thereafter is adapted to reflect the light beams symmetrically with respect to each other. This is allowed by the fact that the polarizer is now transparent to the light beams. For example, the light beams are reflected, wherein one passes through said polarizer, to the scene, and the other beam is reflected to the scene. The first light beam may pass again by the waveplate to change its polarization further to be transparent at the polarizer, but not necessarily. An alternative scenario, depending on the size of the polarizer, is that both of said beams pass through the polarizer again, optionally through a waveplate, to the scene. The fact that the polarizer is transparent allows reflecting the light beams symmetrically, which prevents the keystone effect.

Preferably, the system is adapted to construct the scene progressively as the scene is scanned, based on 3D points obtained from e.g. said triangulation.

Preferably, the system is adapted to filter the detection determined by one sensing unit, based on the presence of a detection over at least one neighboring sensing unit to said one sensing unit at one time step, and/or based on the presence of said detection over at least two consecutive time steps.

Preferably, each of said photodetectors is a single photon detector, preferably a single photon avalanche detector SPADs. Alternatively, said photo detector is an avalanche photo detector. Single photon detectors are advantageous since they are fast by nature, such that the position of the light beam (and the spot it leaves on the scene) is detected in a fast manner and accurate manner. Single photon detectors also minimize the energy needed to be able to detect said beam. In other prior art systems where single photon detectors are not used, the detection is slow such that for example the beam on the field of view appears as a line instead of individual light spots, in which case stereo matching would be needed. However, using single photon detectors to detect a light spot (e.g. a dot) that is being scanned, eliminates the need for stereo-matching.

Furthermore, using a single photon detector such as SPAD in the pixels (i.e. sensing units) is advantageous because it is sensitive to a single photon, which means that the active projected structure will need a minimum amount of energy since the detector is single photon sensitive. Another advantage is sub-nanosecond response time of detectors such as SPADs, meaning the photon is detected and encoded into a digital signal in nanoseconds.

For example, the detector is adapted to output a logic signal e.g. an electrical detection signal upon detection of a photon. For example, a detection signal may be represented by a signal comprising logic '1' e.g. a detection, while no detection signal may be represented by a signal comprising logic '0' e.g. no detection. Alternatively, a detection signal may be represented by or result in a pulse signal, e.g. a transition from logic '0' to logic '1', then a transition back from logic '1' to logic '0', while no detection may be represented by (or result in) an absence of such a pulse signal. Preferably, each photo detector is arranged in a reverse biased configuration.

Preferably, the system comprises at least a second optical sensor, for example constructed similarly to the first optical sensor. Preferably, the system is adapted to triangulate detection points of said first optical sensor with, in a first case, projection position of said projector (the first and/or the second projector), or, in a second case, with detection points of said second optical sensor. This allows to obtain the depth information at each point in the scene. In the first case, it is known where the light source is shining at each moment. Therefore, triangulation may be based on the detection points of said first optical sensor, and the location from where the light source is originating, similarly to the case in which a second optical sensor is used to achieve said triangulation. For example, considering the light source as a camera or an optical sensor, for which the image plane would then contain the dots forming the scanning pattern, instead of seeing or detecting the light spot with the sensing units. For example, the instantaneous position and orientation of the light beam projected by said projector (first and/or second projector) is triangulated with the detection of one optical sensor. In the second case, the detection points of the first and the second optical sensors are triangulated. For example, wherein the system is adapted to triangulate detection points of said first optical sensor with instantaneous position of said first and/or second light beams, or with detection points of a second optical sensor.

Scanning a light beam from said projector or light source is advantageous in allowing triangulation. For example, using a system comprising a light source emitting a light beam on a scene (e.g. an environment) and two of said optical sensors, wherein said two sensors have a shared field of view of the scene, it is possible to convert x-y-time data of the two sensors to x-y-z-time data by triangulation, for each time stamp. For example, by adapting said light source to illuminate a light beam on said scene in an illumination trace, wherein said light source comprises means adapted to scan said light beam on said scene (preferably continuously), wherein said optical sensors monitor the light spot produced by said light beam and output locations of points of at least one object (e.g. points of surfaces of said object) in said scene along said trace at a plurality of instances, wherein the x-y-time data of the two optical sensors can be converted to x-y-z-time data using triangulation. The light source may act for example as a reference point, such that said locations of said points of said object of the first optical sensor can be triangulated with those of the second optical sensor, to create the depth or z-dimension.

Preferably, finding depth information may be preceded by a filtering step, for example to reduce the number of sensing units with false detections. Filtering may be based on expected pulse width, expected dot projection size, past detection(s) and current detection(s) of the pixel and its neighboring pixel(s). For example, checking the detection of the neighboring sensing units (e.g. pixels), or checking the persistence of the detections over time. This is an in-pixel filtering mechanism. Another filtering mechanisms may be also available, for example after projecting the detections on a periphery of the optical sensor, it is possible to remove some noisy detections, since the projection pattern is known.

Preferably, the light source is adapted to be in a wavelength detectable by the sensing units of the optical sensor. For example, between 100 nanometer and 10 micrometer, preferably between 100 nanometer and 1 micrometer. For example, each optical sensor comprises photo detectors able to detect photons impinging on each detector within a wavelength detection window falling within the range of 100 nanometer and 10 micrometer, preferably between 100 nanometer and 1 micrometer. It is also possible to use multiple wavelengths to reduce sensitivity to surface and color, and then have a filter on chip.

Preferably, the system comprises image representation means, for example a screen-like or other image representation devices, so as to reproduce locations of points of said objects in said scene. However, said processor may allow analyzing the scene, for example by extracting features of objects in the scene, without necessarily producing an image of said scene.

Preferably, the optical system is used for 3D vision applications, for example AR/VR applications. For example, the system may be used to visualize objects in three dimensions. Alternatively, said sensor may allow analyzing the scene, for example by extracting features of objects in the scene, without necessarily producing an image of said scene. Preferably, the system comprises a plurality of optical sensors and/or a plurality of light sources. This is advantageous in creating 3D vision. For example, by triangulating the outputs (i.e. the x-y data) of two such optical sensors to obtain 3D information (x-y-z data).

Any feature of the second aspect (system) may be as correspondingly described in the first aspect (method). For example, the system of the second aspect is operating based on the method of the first aspect.

In a third aspect, the present invention relates to a headset or wearable device comprising the system of the second aspect. For example, a wearable device that is capable of being mounted on the head of a user, such as an AR/VR/XR glasses. For example, wherein a sensor is mounted on one side of the glasses, and a laser source is mounted on the other side of the glasses.

In a fourth aspect, the present invention relates to a system for 3D projection. The system comprises a first optical sensor, wherein said first optical sensor comprises a plurality of rows and columns of sensing units, and each sensing unit comprises a photo detector. The system further comprises at least two projectors, each adapted to project a light beam onto a 3D scene, thereby creating two light spots on said scene. The system further comprises scanning means adapted to scan the light beams on said 3D scene, each, along a trajectory. The system further comprises optics adapted to image said scene onto said sensing units. The system further comprises a mirror, a polarizer, and a polarization changing element (e.g. lambda/4 waveplate). The light beams have, initially, a first predetermined polarization. The polarizer is adapted to reflect the light beams from said projectors to said mirror through the polarization changing element, wherein the polarization changing element is adapted to change the polarization of the light beams to a second predetermined polarization, wherein the second predetermined polarization is such that the polarizer is transparent to said light beams, wherein the mirror is adapted to reflect said light beams symmetrically with respect to each other.

For example, the light beams are illuminated on the polarizer with a certain polarization such that said beams are reflected from said polarizer. The light beam thereafter passes through the lambda/4 waveplate which partially changes the polarization e.g. 90 degrees rotation. The light beam thereafter is reflected by the mirror. For example, one light beam is reflected to the scene, optionally passing through the waveplate. The other light beam is reflected to the scene through the waveplate which partially changes the polarization e.g. 90 degrees rotation, and finally through the polarizer, which allows it to pass through because of polarization change introduced by the lambda/4 waveplate (e.g. 180 degrees rotation). The system is characterized in that the components of the system are arranged such that the mirror reflects said light beams symmetrically from the surface of said mirror, thereby avoiding the so-called key stone effect. The light beam may also pass through the polarizer together with the light beam, depending on the size of the polarizer.

The fourth aspect of the invention can be combined with embodiments of the first and second aspects of the invention.

Further characteristics and advantages of embodiments of the present invention will be described with reference to the figures. It should be noted that the invention is not restricted to the specific embodiments shown in these figures or described in the examples.

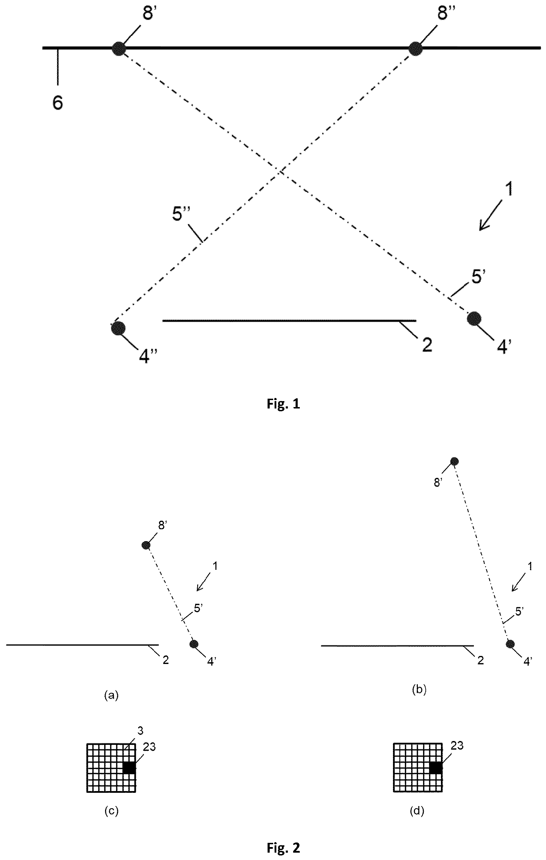

Fig. 1 shows a top view of an optical sensing system (1), comprising a first optical sensor (2). The optical sensor (2) comprises a plurality of sensing units (3), as shown in the front view of said optical sensor (2) in Fig. 2 (c-d). Each sensing unit (3) comprises a single photon detector, preferably a SPAD. The SPADs output a binary value, for example corresponding to whether a SPAD detects a photon. The system (1) comprises a first projector (4') e.g. a light source, projecting a first light beam (5') on a 3D scene (6). The system (1) comprises optics (not shown) able to produce an image of the scene (6) on said optical sensor (2). For example, the reflected light is reflected from the scene (6) or from objects therein. The reflected light is imaged on the first optical sensor (2) by means of said optics. For example, an image is produced on sensing units (3) of said optical sensor (2). The system (1) further comprises a scanner (not shown in Fig. 1, but denoted in other figures by reference sign 11) capable of scanning the first light beam (5') on the scene (6) along a trajectory. The first light beam (5') results in a first light spot (8') on the scene (6). The system (1) is capable of obtaining the depth of objects in the scene (6) as the scanner is scanning the light beam (5') along the scene (6). In other words, for each time step, the system (1) obtains one depth value at the location of the light spot (8'). The depth value is obtained using triangulation, as explained above. Fig. 1 further shows, as an optional feature, a second projector (4") projecting a second light beam (5") on the scene (6), thereby creating a second light spot (8"). It is noteworthy that the scene is illustrated here as flat surface for simplicity, however the scene in real life is a 3D scene.

Fig. 2 shows in (a) the light spot (8') at a close distance, and the corresponding detected spot (23) on the optical sensor (2) in (c), wherein the detected spot (23) has a detected spot size of 2 by 2 pixels. Furthermore, Fig. 2 shows in (b) the light spot (8') at a further distance, and the corresponding detected spot (23) on the optical sensor (2) in (d), wherein the detected spot (23) has the same size as in (c). In other words, within a range of distances from said optical sensor, the detected spot size of the detected spot remains within a certain range of detected spot sizes. In most or all prior art systems, this is not the case i.e. the further the object, the larger the detected spot size, due to the use of collimated light beams having no divergence, which is disadvantageous for longer distances because the spot size is large, the energy is scarce per unit area, and therefore it is difficult to distinguish the noise from the signal. In the prior art, the spot size is also significantly and unpredictably variable with distance and therefore there is no fixed criteria for distinguishing from signal from the noise. In the system and method of the present invention, however, the spot size of the light spot and the spot size of the detected spot are within a certain range of sizes, as described above and in Fig. 5. This is achieved by adapting the light beam to have a predetermined divergence, such that the detected spot size is known and distinguishable from the noise. This also helps distinguish the noise from the signal at large distance.

Fig. 3 shows in (a) the first trajectory (9') and the second trajectory (9") to be scanned on the scene, and the region of overlap (10) created in the middle between the two trajectories. In this case, the trajectories are in a Lissajous fashion, but other scanning trajectories may be envisaged. Fig. 3 shows a similar scenario in (b), having four scanning trajectories (9', 9", 9"', 9"") by four light beams, and a region of overlap (10) in between said trajectories. The significance of the region of overlap (10) is that it is in a region where the velocity of the scanning beam is at a minimum. As a result, two different scenarios may be envisaged to save power or increase sampling. For example, since the velocity of the scanning beam is at a minimum, the number of samples obtained are at a maximum, and therefore the laser may be pulsed such that less samples are obtained, therefore reducing the power consumption. Alternatively, for some applications such as AR/VR/XR, the center of the scene is very important, therefore placing the region of overlap at the center of the scene as it is in Figs. 3 (a-b), allows to get more samples due to the combination of low velocity and fast pulsing, therefore getting even more information about the scene in that region. It is noteworthy that Fig. 3 shows the desired trajectory on the scene e.g. based on the scanning mirror rotation. However, the trajectory which is actually scanned on the scene is as shown in Fig. 6.

Fig. 4 shows two projectors (4', 4") separated by a distance (d), wherein the light beams (5', 5") of said projectors (4', 4") goes through optics (14), which focuses the light beams (5', 5") on a scanner (11). The scanner (11) being e.g. a rotatable mirror e.g. MEMS, is able to rotate and therefore scan the light beams (5', 5") on the scene (6). The distance (d) is adapted such that a region of overlap (10) is created, or in other words, such that there is no gap between the two scanning trajectories. To achieve that, the scanner should be able to rotate at least as much as the angle (B) between the two beams (5', 5"). Figs. 4 (b-c) shows multiple projectors arranged in different fashions. The front view is shown to the left, and the side view is shown to the right. The angle (B) may be related to the distance between the two projectors.

Fig. 5 shows the distance (17) versus beam size (18) measured in number of pixels. In (a), the curve (19) shows a fastly diverging beam, while in (b) the curve (19) shows a slowly diverging beam. Fig. 5 shows that at the maximum distance from the optical sensor, the detected spot size is at a minimum value, while at the minimum distance from the optical sensor, the detected spot size is at a maximum value. One way to look at this is to understand that at said maximum distance, the energy becomes scarce, and therefore it is needed to maintain a minimum detected spot size at which the system can operate. However, at short distances, the energy is not scarce, and therefore it is possible to operate with a large detected spot size.

It is noted that, after a predetermined distance (20), the beam size is substantially fixed (or to a great extent), for example equal to two pixels, with a range of error. This happens faster in the case of a fastly diverging beam (a), compared to a slowly diverging beam (b). This is useful in case the size of the field of view is not the same in both dimensions e.g. the horizontal field of view is smaller or bigger than the vertical field of view. For example, the field of view is 70 degrees in the vertical dimension, and 20 degrees in the horizontal dimension. In this case, Fig. 5 (a) shows one dimension of a field of view (either horizontal or vertical) bigger than that in Fig. 5 (b). To be able to image this field of view on the optical sensor, an anamorphic optics is needed.

Fig. 5 further shows that the point spread function of the beam is changing quickly below the predetermined distance (20), because the objects at these distances are very close to the optical sensor, but above the predetermined distance (20) it stays within a small range.

Fig. 6 shows in (a) the light beams (5', 5") symmetrically illuminated on a mirror (11) by projectors (4', 4"), and thereafter are symmetrically reflected from said mirror (11). This results in the ideal trajectories (9', 9") on a scene as shown in (b). However, the scenario in (a) can only occur if the projectors (4', 4") are transparent, which is not the case. One alternative is shown in (c), wherein the light beams (5', 5") from projectors (4', 4") are illuminated on a mirror (11), which reflects the light beams (5', 5") on the scene. In this case, the projectors are not illuminated symmetrically on the mirror (11), as it is in (a). This creates the trajectories shown in (d), due to the so-called keystone effect. Such a trajectory is disadvantageous in that the field of view is not symmetrical, and does not cover as much as expected / needed. This can be compensated at the receiver side, but would as a result complicates the system. The present invention provides a solution to this problem at the projector side.

Fig. 7 shows a possible solution to the problem shown in Fig. 6 (c-d). In (a), projectors (4', 4") illuminate the light beams (5', 5") with a certain polarization, and are reflected by the polarizer (15) due to said polarization (i.e. the polarization of the light beams is such that the polarizer acts as a mirror). The light beams (5', 5") thereafter pass by a lambda/4 waveplate (21) which partially changes the polarization of the light beams (5', 5") e.g. 90 degrees rotation. The light beams (5', 5") thereafter are reflected by the mirror (11). One light beam (5") is reflected directly to the scene, optionally passing through the waveplate (21). The other light beam (5') is reflected to the scene, through the wave plate (21) which partially changes the polarization e.g. 90 degrees rotation, and finally through the polarizer (15), which allows it to pass through due to the polarization change (e.g. 180 degrees rotation) introduced by the waveplate (21) (i.e. the polarization of the light beams is such that the polarizer is transparent). In other words, the polarization in the beginning is such that the polarizer acts as a mirror to the beams, while the polarization at the end is such that the polarizer is transparent to the beams. This allows to achieve the scanning trajectory shown in Fig. 6 (d). The light beam (5") may also pass through the polarizer (15) together with the light beam (5'), depending on the size of the polarizer (15).

A simpler and more preferred alternative is shown in Fig. 7 (b). In this case, only a mirror (11), polarizer (15), and a lambda/4 waveplate (21) are needed. The light beams (5', 5") are illuminated on the polarizer (15) with a certain polarization, thereafter reflected and passing through the lambda/4 waveplate (21) which partially changes the polarization e.g. 90 degrees rotation, and reflected by the mirror (11). One light beam (5") is reflected to the scene, optionally passing through the waveplate (21). The other light beam (5') is reflected to the scene through the waveplate (21) which partially changes the polarization e.g. 90 degrees rotation, and finally through the polarizer (15), which allows it to pass through because of polarization change introduced by the lambda/4 waveplate (21) (e.g. 180 degrees rotation). The components of the system are arranged such that the mirror (11) reflects said light beams symmetrically from the surface of said mirror (11), thereby avoiding the so-called key stone effect. The light beam (5") may also pass through the polarizer (15) together with the light beam (5'), depending on the size of the polarizer (15).

There can be other designs to achieve the goal of Fig. 7, however the main idea is to design the system such that the light beams are reflected off the mirror to the scene in a symmetrical manner, such that the keystone effect is prevented.

Other arrangements for accomplishing the objectives of the methods and devices embodying the invention will be obvious for those skilled in the art. The proceeding description gives details of certain embodiments of the present invention. It will, however, be clear that no matter how detailed the above turns out to be in text, the invention may be applied in many ways. It should be noted that the use of certain terminology when describing certain characteristics or aspects of the invention should not be interpreted as implying that the terminology herein is defined again to be restricted to specific characteristics or aspects of the invention to which this terminology is coupled.

### LIST OF REFERENCE SIGNS

- **1**: Optical sensing system
- **2**: Optical sensor
- **3**: Sensing unit
- **4', 4"**: First and second light source
- **5', 5"**: First and second light beam
- **6**: Scene
- **8', 8"**: First and second light spot
- **9', 9"**: First and second trajectory
- **10**: Region of overlap
- **11**: Scanner
- **12, 13**: First and second dimension
- **14**: Optics
- **15**: Polarizer
- **16**: Line of symmetry
- **17**: Distance from the sensor
- **18**: Beam size determined in pixels
- **19**: Curve
- **20**: Predetermined distance
- **21**: lambda/4 waveplate
- **23**: Detection / detected spot
- **24', 24"**: Minimum and maximum spot size
- **25', 25"**: Minimum and maximum distance

## Claims

1. A method for 3D projection, the method comprising the steps of:
- projecting a first light beam (5') onto a 3D scene (6), thereby creating a first light spot (8') on said 3D scene (6), by means of a first projector (4');
- scanning said first light beam (5') along a first trajectory (9'), by means of a scanner;
- imaging said scene (6) onto a plurality of rows and columns of sensing units (3) of an optical sensor (2), by means of optics, wherein the first light spot (8') in the scene (6) corresponds to a detected spot (23) on said optical sensor (2), wherein said detected spot (23) has a detected spot size determined by said sensing units (3);
wherein the detected spot size has a predetermined range between a maximum value (24') and a minimum value (24"),
wherein said first light beam (5') has a predetermined divergence such that said detected spot size has said minimum value (24") when the first light spot (8') is at a maximum predetermined distance (25") from the optical sensor (2), and such that said detected spot size has said maximum value (24') when the first light spot (8') is at a minimum predetermined distance (25') from the optical sensor (2), wherein the maximum and minimum predetermined distances (25', 25") define the operable range of distances from said optical sensor (2).

2. A method according to claim 1, wherein the ratio between said maximum and said minimum values of detected spot sizes is at most 10:1, preferably at most 5:1, more preferably at most 2:1, even more preferably 1.5:1, most preferably 1:1.

3. A method according to any of the previous claims, further comprising the steps of:
- projecting a second light beam (5") onto said 3D scene (6), thereby creating a second light spot (8") on said 3D scene (6), by means of a second projector (4");
- scanning said second light beam (5") along a second trajectory (9"), by means of said scanner or a different scanner, wherein said first trajectory (9') and said second trajectory (9") are overlapping in a region of overlap (10).

4. A method according to claim 3, further comprising the step of adapting said region of overlap (10) to be at a substantially central location in the scene (6), with respect to at least one scanning dimension.

5. A method according to any of claims 3 or 4, wherein the method comprises the step of pulsing said first and second light beams (5', 5") at a predetermined pulsing rate, wherein the pulsing rate in a region of interest of a user is substantially different than elsewhere.

6. A method according to any of claims 3 to 5, wherein the method comprises the step of adapting the scanning trajectory to have at least a maximum and a minimum scanning velocities, wherein the scanning velocity at the region of overlap (10) is either the minimum or the maximum scanning velocity.

7. A method according to any of the previous claims, wherein the method comprises the step of adapting the divergence so as to have a detected spot size of at least two by two pixels, preferably at least three by three pixels.

8. A method according to any of claims 2 to 6, wherein said first and second projector (4', 4") are distanced by a predetermined distance (d), wherein said distance (d) is adapted such that said region of overlap (10) is created.

9. A method according to any of claims 3 to 8, further comprises the step of adapting the scanning such that the first and second trajectory (9', 9") on said scene (6) are symmetrical along a line of symmetry (16), wherein said line of symmetry crosses said region of overlap (10).

10. An optical sensing system (1) for 3D optical sensing, comprising:
- a first optical sensor (2), wherein said first optical sensor (2) comprises a plurality of rows and columns of sensing units (3), and each sensing unit (3) comprises a photo detector,
- a first projector (4'), adapted to project a first light beam (5') onto a 3D scene (6), thereby creating a first light spot (8') on said scene (6),
- scanning means adapted to scan the first light beam (8') on said 3D scene (6) along a first trajectory (9'), and
- optics adapted to image said scene (6) onto said sensing units (3),
wherein the first light spot (8') in the scene (6) corresponds to a detected spot (23) on said optical sensor (2), wherein said detected spot (23) has a detected spot size determined by said sensing units (3); wherein the detected spot size has a predetermined range between a maximum value (24') and a minimum value (24"),
wherein said projector (4') is adapted to have a predetermined divergence, such that said detected spot size has said minimum value (24") when the first light spot (8') is at a maximum predetermined distance (25") from the optical sensor (2), and such that said detected spot size has said maximum value (24') when the first light spot (8') is at a minimum predetermined distance (25') from the optical sensor (2), wherein the maximum and minimum predetermined distances (25', 25") define the operable range of distances from said optical sensor(2).

11. An optical sensing system (1) according to claim 10, wherein the system (1) further comprises a second projector (4"), adapted to project a second light beam (5") onto said 3D scene (6), thereby creating a second light spot (8") on said scene (6), wherein said scanning means or a different scanning mean, is adapted to scan the second light beam (5") on said 3D scene (6) along a second trajectory (9"), wherein said first trajectory (9') and second trajectory (9") are overlapping in a region of overlap (10).

12. An optical sensing system (1) according to any of claims 10 or 11, wherein the scanning means is a scanning mirror (11), wherein the system further comprises a polarizer (15), and polarization changing element (21), wherein the light beams (5', 5") have, initially, a first predetermined polarization, wherein the polarizer (15) is adapted to reflect the light beams (5', 5") from said projectors (4', 4") to said mirror (11) through the polarization changing element (21), wherein the polarization changing element (21) is adapted to change the polarization of the light beams (5', 5") to a second predetermined polarization, wherein the second predetermined polarization is such that the polarizer (15) is transparent to said light beams (5', 5"), wherein the mirror (11) is adapted to reflect said light beams (5', 5") symmetrically with respect to each other.

13. An optical sensing system (1) according to any of claims 10 to 12, wherein the system (1) is adapted to triangulate detection points of said first optical sensor (2) with instantaneous position of said first and/or second light beams (5', 5"), or with detection points of a second optical sensor.

14. An optical sensing system (1) according to any of claims 10 to 13, wherein the system (1) is adapted to construct the scene (6) progressively as the scene (6) is scanned, based on 3D points obtained during scanning, wherein one 3D point is obtained at each time step.

15. An optical sensing system (1) according to any of claims 10 to 14, wherein the system (1) is adapted to filter the detection determined by one sensing unit (3), based on the presence of a detection over at least one neighboring sensing unit to said one sensing unit at one time step, and/or based on the presence of said detection over at least two consecutive time steps.
